# FASCICULE DE BREVET EUROPEEN

(11) **EP 2 555 973 B1**
(45) Date de publication et mention de la délivrance du brevet: **11.02.2015**
(21) Numéro de dépôt: 11718449.9
(22) Date de dépôt: 01.04.2011
(51) Int. Cl.: B64C 11/06, F04D 29/056

(54) **HÉLICE NON CARÉNÉE POUR TURBOMACHINE**
NICHTVERKLEIDETER ROTOR FÜR EINE GASTURBINE
OPEN ROTOR FOR A TURBINE ENGINE

(30) Priorité: 09.04.2010 FR 1001496
(43) Date de publication de la demande: 13.02.2013
(73) Titulaire: Snecma, 75015 Paris (FR)
(72) Inventeur: BOURU, Michel, André, 77550 Moissy Cramayel Cedex (FR); FABRE, Adrien, Jacques, Philippe, 77550 Moissy Cramayel Cedex (FR); JABLONSKI, Laurent, 77550 Moissy Cramayel Cedex (FR); MAHIEU, Jean-Noël, 77550 Moissy Cramayel Cedex (FR)
(74) Mandataire: Jolly, Christophe
(86) Numéro de dépôt international: PCT/FR2011/050744
(87) Numéro de publication internationale: WO 2011/124832

(56) Documents cités:
- FR-A1- 2 817 233
- GB-A- 2 226 087

## Description

La présente invention concerne une hélice à pales à calage variable pour une turbomachine du type à hélices non carénées (en anglais « open rotor » ou « unducted fan »).

Une turbomachine de ce type comprend deux hélices externes coaxiales et contrarotatives, respectivement amont et aval, qui sont entraînées en rotation par une turbine de la turbomachine et qui s'étendent sensiblement radialement à l'extérieur de la nacelle de la turbomachine.

Chaque hélice comprend un élément de rotor comportant des logements cylindriques sensiblement radiaux répartis autour de l'axe longitudinal de la turbomachine et dans lesquels sont montées des platines de support des pales de l'hélice. Chaque pale comprend par exemple un pied à section en queue d'aronde qui est engagé axialement et retenu radialement dans une rainure de forme complémentaire de la platine.

Chaque platine comprend un corps sensiblement cylindrique vissé dans une couronne cylindrique qui est centrée et guidée en rotation dans un logement de l'élément de rotor au moyen de paliers de roulement du type à rouleaux ou à billes.

Les platines et les couronnes peuvent tourner dans les logements de l'élément de rotor et sont entraînées en rotation autour des axes des pales par des moyens appropriés de façon à régler le calage angulaire des pales.

Ce type de montage n'est toutefois pas satisfaisant du fait que la rétention radiale des pales dans les logements radiaux est assurée par les filets de vissage des platines sur les couronnes, lesquels filets risquent de se détériorer rapidement, limitant ainsi la durée de vie de l'hélice.

Ainsi, la demanderesse a déjà proposé dans sa demande FR09/01343 de former des dents en saillie sur la surface externe de la platine de support de pale, la platine étant engagée depuis l'extérieur dans un logement radial et les dents de la platine coopérant avec des dents complémentaires de la surface interne d'une couronne engagée depuis l'intérieur du logement.

Toutefois, dans ce type de configuration, le démontage des pales impose l'accès préalable à la couronne de blocage radial de la platine montée depuis l'intérieur du logement, ce qui nécessite le démontage d'éléments du moyeu du rotor. Des lors, il n'est pas possible d'effectuer un démontage simple et rapide des pales en escale par exemple lorsque l'avion est stationné dans un aéroport.

Dans certains cas et par exemple lorsque la pale est tissée dans un matériau composite à fibres de carbone, il est impossible de réaliser un pied de pale en queue d'aronde et le pied a en général une forme cylindrique.

Ainsi, dans la demande FR10/50234 de la demanderesse, le pied de pale cylindrique comprend à son extrémité interne une collerette annulaire. Une bague interne de palier est montée serrée autour du pied et comprend à son extrémité inférieure une collerette annulaire coopérant avec la collerette annulaire du pied pour assurer la retenue radiale du pied. La bague interne est reliée par l'intermédiaire de billes de roulement à deux bagues externes espacées axialement et fixées par vissage dans le logement radial.

Dans cette réalisation, les billes de roulement sont insérées une à une depuis l'intérieur du logement dans l'espace compris entre les bagues interne et externe, ce qui requiert un temps long de mise en place pour chaque pale. De plus, la manipulation de chaque bille de roulement peut conduire à introduire entre les bagues interne et externe des éléments polluants tels que des poussières abrasives pouvant endommager les billes et les pistes de roulement.

Un autre mode de réalisation de montage d'un pied de pale d'une hélice à calage variable est divulgue dans le document FR 2817233 A1 (demande FR 00/15501).

L'invention a notamment pour but d'apporter une solution simple, efficace et économique à ces problèmes.

A cette fin, elle propose une hélice non carénée pour une turbomachine, comprenant des pales d'hélice montées à rotation autour de leurs axes dans des logements radiaux d'un élément annulaire de rotor, chaque pale comportant un pied à corps cylindrique engagé depuis l'extérieur dans un logement radial et guidé en rotation autour de son axe dans ce logement par deux paliers de roulement, caractérisée en ce qu'un premier palier est porté par un rebord annulaire de l'extrémité radialement interne du logement, en ce que le second palier est porté par un segment annulaire à jupe cylindrique montée dans une gorge du corps cylindrique et par un écrou de verrouillage vissé sur la jupe cylindrique du segment et formant une entretoise d'appui sur le premier palier, le second palier étant coiffé extérieurement par un anneau entourant le corps cylindrique du pied de pale et comportant des dents de crabot externes coopérant avec des dents de crabot internes du logement pour retenir axialement l'anneau dans le logement, et en ce que des moyens de blocage sont engagés entre les dents de crabot du logement et entre les dents de crabot de l'anneau pour empêcher la rotation de l'anneau et son retrait axial du logement.

A la différence de la technique antérieure, le premier palier de roulement est monté à l'état assemblé, depuis l'extérieur, dans le logement sur un rebord de l'extrémité radialement interne du logement. Le second palier est également monté à l'état assemblé autour du pied et est porté par le segment annulaire monté dans la gorge annulaire et maintenu dans celle-ci par l'écrou vissé sur la jupe cylindrique du segment annulaire.

L'ensemble formé par la pale, le second palier, le segment annulaire et l'écrou est engagé axialement depuis l'extérieur dans le logement radial. Le blocage radial de la pale dans le logement est assuré par un anneau non pas monté depuis l'intérieur du logement, comme dans la technique antérieure, mais depuis l'extérieur de ce logement. L'anneau comprend une denture à crabots engagée et bloquée en appui radial sur une denture complémentaire du logement, pour résister aux efforts centrifuges appliqués à la pale en fonctionnement.

Pour réaliser le montage depuis l'extérieur de l'anneau dans le logement, on comprend que l'anneau doit être monté autour du pied avant de monter le second palier autour du pied de pale. L'anneau est donc monté puis mis en position d'attente autour du pied jusqu'à sa fixation par crabotage dans le logement radial.

La retenue radiale des pales n'est donc pas assurée par un filetage mais par un système de crabots et les opérations de montage et démontage des pales peuvent avantageusement être effectuées depuis l'extérieur sur l'aile d'un avion sans intervention sur le moyeu du rotor puisque l'anneau est monté depuis l'extérieur.

Selon une autre caractéristique de l'invention, un couvercle annulaire entourant le pied de pale est vissé sur l'extrémité externe du logement pour interdire le retrait axial des moyens de blocage. La fixation du couvercle par vissage ne pose aucune difficulté puisque celui-ci n'est utilisé que pour assurer la rétention radiale des moyens de blocage et non pas la rétention radiale des pales et n'est donc pas sollicité pour la transmission des efforts centrifuges transmis par les pales en fonctionnement.

Selon encore une autre caractéristique de l'invention, le segment annulaire est en deux parties montées bout à bout dans la gorge du corps de pale.

La jupe cylindrique du segment annulaire peut comprendre au moins une dent en saillie axiale engagée dans un renfoncement du corps cylindrique et débouchant dans la gorge annulaire de manière à bloquer en rotation le segment sur le corps cylindrique.

Une rondelle de verrouillage est avantageusement intercalée entre l'écrou et le segment annulaire et coopère par liaison de formes avec l'écrou et le segment afin de bloquer en rotation l'écrou sur le pied de pale.

Dans une réalisation particulière de l'invention, l'anneau comprend trois dents de crabot régulièrement réparties autour son axe et ayant chacune une étendue angulaire d'environ 60°.

Les moyens de blocage en rotation de l'anneau dans le logement peuvent comprendre des cales en forme de secteurs de cylindre engagées par translation axiale depuis l'extérieur entre les dents de crabot de l'anneau et les dents de crabot du logement. Chaque cale est insérée, par exemple par translation dans une direction parallèle à l'axe du logement, entre deux dents consécutives de l'anneau et entre deux dents consécutives du logement. Ces cales coopèrent par butée en direction circonférentielle avec les extrémités circonférentielles des dents de l'anneau et des dents du logement pour immobiliser en rotation l'anneau dans le logement.

Une autre rondelle de verrouillage est avantageusement intercalée entre le couvercle et l'anneau et coopère par liaison de formes avec le couvercle et l'anneau afin de solidariser en rotation le couvercle sur l'anneau.

Selon une autre caractéristique de l'invention, le pied de pale est creux et comprend des renforts métalliques fixés par collage sur ses faces interne et externe. Ce type de renforts peut par exemple être utilisé dans le cas d'une aube en matériau composite à fibres de carbone. Dans ce cas, la gorge annulaire de réception de la jupe cylindrique du segment annulaire est formée sur la surface externe du renfort externe.

Avantageusement, la paroi du pied de pale est d'épaisseur sensiblement constante et comprend des ondulations coopérant avec des ondulations complémentaires des renforts. Ces ondulations assurent par coopération de forme une meilleure fixation des renforts sur les pieds de pale.

L'invention concerne également une turbomachine, telle qu'un turbopropulseur ou un turboréacteur d'avion, comprenant au moins une hélice telle que décrite ci-dessus.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale d'une turbomachine à hélices non carénées ;
- la figure 2 est une vue schématique en coupe selon un plan passant par l'axe d'un logement radial d'un élément de rotor dans lequel est montée et fixée une pale d'une hélice selon l'invention ;
- la figure 3 est une vue schématique en perspective de l'élément de rotor de la figure 2 ;
- la figure 4 est une vue schématique en perspective éclatée des différentes pièces de la figure 2 sans l'élément de rotor ;
- la figure 5 est une autre vue schématique en perspective avec éclatement et arrachement partiel des différentes pièces de la figure 2 sans l'élément de rotor ;
- les figures 6 à 11 sont des vues schématiques en perspective et avec arrachement partiel de l'élément de rotor, du pied de pale supportant un palier de roulement, de l'anneau de blocage et du couvercle supérieur de la figure 2, et illustrent des étapes de montage de ces éléments.

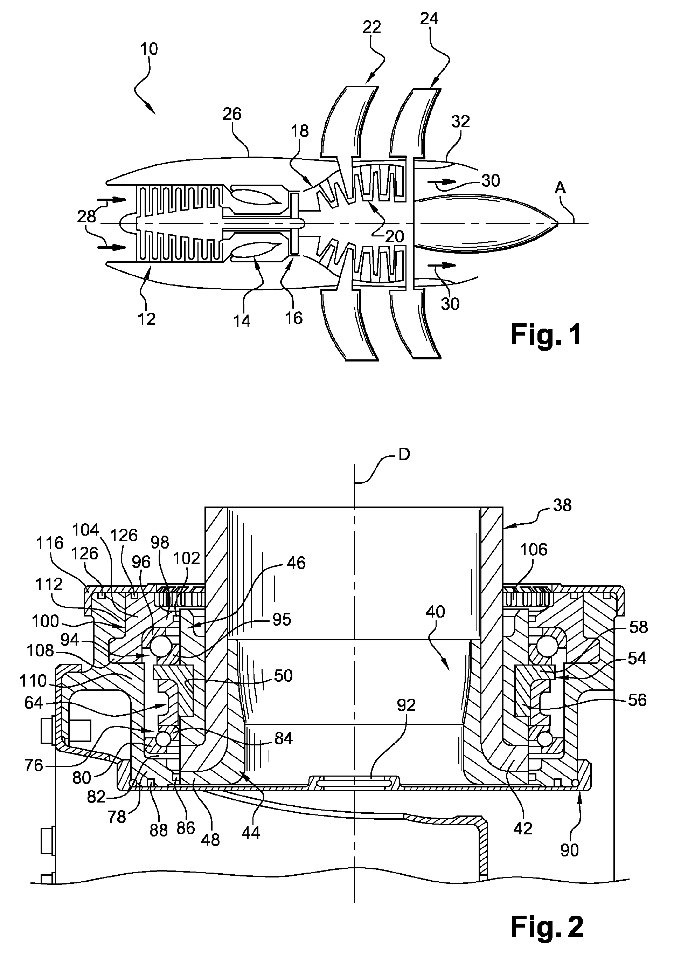

On se réfère tout d'abord à la figure 1 représentant une turbomachine 10 à hélices non carénées connue sous l'acronyme anglais « open rotor » ou « unducted fan » qui comporte d'amont en aval, dans le sens d'écoulement des gaz à l'intérieur de la turbomachine, un compresseur 12, une chambre annulaire de combustion 14, une turbine haute-pression 16, et deux turbines basse-pression 18, 20 qui sont contrarotatives, c'est-à-dire qu'elles tournent dans deux sens opposés autour de l'axe longitudinal A de la turbomachine.

Chacune de ces turbines aval 18, 20 entraîne en rotation une hélice externe 22, 24 s'étendant radialement à l'extérieur de la nacelle 26 de la turbomachine, cette nacelle 26 étant sensiblement cylindrique et s'étendant le long de l'axe A autour du compresseur 12, de la chambre de combustion 14, et des turbines 16, 18 et 20.

Le flux d'air 28 qui pénètre dans la turbomachine est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe A de la turbomachine. Ces pales s'étendent sensiblement radialement et sont à calage variable, c'est-à-dire qu'elles peuvent tourner autour de leurs axes de façon à optimiser leurs positions angulaires en fonction des conditions de fonctionnement de la turbomachine.

Selon l'invention et comme représenté aux figures 2 à 5, chaque hélice comprend un élément de rotor formé par un anneau polygonal 34 qui s'étend autour de l'axe A de la turbomachine et qui comporte une pluralité de logements 36 radiaux sensiblement cylindriques dans lesquels sont engagés les pieds des pales de l'hélice.

Le pied 38 de chaque pale est creux et comprend un corps sensiblement cylindrique 40 engagé dans un logement radial 36 de l'anneau polygonal 34. Une collerette annulaire 42 est formée à l'extrémité radialement interne du pied 38. Le corps cylindrique 40 comprend deux renforts métalliques 44, 46. Le premier renfort 44 comporte à son extrémité inférieure une collerette annulaire 48 et est engagé par translation radiale à l'intérieur du pied de manière à ce que sa collerette vienne en contact avec la collerette annulaire 42 du pied. Le deuxième renfort métallique 46 est monté à l'extérieur du pied et autour de celui-ci et son extrémité inférieure est positionnée en butée axiale sur la collerette annulaire 42 du pied 38. Les renforts métalliques 44, 46 sont fixés sur le pied par exemple par collage.

Le renfort métallique externe 46 comprend une gorge annulaire externe 50 et deux renfoncements 52 diamétralement opposés. Ces renfoncements 52 sont formés dans le rebord inférieur de la gorge annulaire 50 et débouchent à l'intérieur de celle-ci.

Un segment annulaire 54 est monté dans la gorge annulaire 50 et comprend une jupe cylindrique 56 raccordée à son extrémité radialement externe à un rebord annulaire radial 58 comportant quatre encoches 60 régulièrement réparties sur sa périphérie. L'extrémité interne de la jupe cylindrique comprend deux dents 62 en saillie axialement vers l'intérieur du logement et diamétralement opposées l'une par rapport à l'autre. Ces dents 62 sont engagées dans les renfoncements 52 du renfort métallique externe 46. La surface externe de la jupe cylindrique 56 comprend un filetage de vissage d'un écrou 64 de verrouillage du segment annulaire 54 dans la gorge annulaire 50.

Le segment annulaire 54 est réalisé en deux parties 66, 68 pour permettre son montage dans la gorge annulaire 50 du corps de pale.

De préférence, le segment annulaire 54 est fabriqué d'une seule pièce puis le filetage est réalisé sur la surface externe de la jupe cylindrique 56 du segment annulaire 54. Le segment annulaire 54 est ensuite découpé en deux parties de 180° d'étendue angulaire. La réalisation du filetage sur le segment annulaire 54 monobloc permet de garantir l'alignement des filetages de chacune des deux parties 66, 68 du segment 54 lorsque celui-ci est monté dans la gorge annulaire 50 du corps de pale.

Une première rondelle 70 est intercalée axialement entre l'écrou 64 et le rebord annulaire 58 du segment annulaire 54 et comprend sur sa périphérie externe des premières pattes 72 rabattues vers l'extérieur et engagées dans les encoches 60 du rebord annulaire 58 du segment annulaire 54 de manière à immobiliser la rondelle 70 par rapport au segment annulaire 54.

La première rondelle 70 comprend également sur sa périphérie externe des secondes pattes 74 rabattues vers l'intérieur et engagées entre des dents de la périphérie externe de l'écrou 64 de manière à immobiliser en rotation la rondelle 70 par rapport à l'écrou 64 vissé sur le segment 54.

Un premier palier 76 à roulement à billes est monté à l'intérieur du logement radial et est porté par un rebord annulaire 78 de l'extrémité radialement interne du logement 36. Une bague 80 du palier 76 est en appui sur une rondelle de précontrainte 82 intercalée entre le rebord annulaire 78 du logement et le palier 76. Cette rondelle de précontrainte 82 limite les chocs sur le rebord annulaire du logement et a une épaisseur de l'ordre de 0,5 à 0,8 mm. L'autre bague 84 du palier 76 est en contact avec l'extrémité radialement interne de l'écrou 64, d'une part, et avec le renfort métallique externe 46 du pied de pale, d'autre part. La périphérie interne du rebord annulaire 78 du logement comprend une gorge annulaire 86 dans laquelle est monté un jonc annulaire d'étanchéité (non représenté) en contact avec le corps cylindrique du pied de pale. Une gorge annulaire 88 est également formée sur la face interne du rebord annulaire 78 du logement et comprend un autre jonc annulaire d'étanchéité (non représenté) coopérant avec un couvercle annulaire interne 90 vissé depuis l'intérieur sur la périphérie externe du rebord 78. Ce couvercle interne 90 comprend une ouverture centrale 92 pour le passage de moyens de calage angulaire de la pale.

Un second palier 94 prend appui par l'intermédiaire de sa bague interne 95 sur la surface externe du rebord annulaire 58 du segment annulaire 54. La bague externe 96 de ce second palier prend appui sur une surface intérieure d'un rebord annulaire radial 98 d'un anneau 100 recouvrant le second palier 94. Le rebord annulaire 98 de l'anneau 100 comprend une gorge annulaire 102 sur sa périphérie interne dans laquelle est logé un jonc annulaire d'étanchéité (non représenté) coopérant avec l'extrémité supérieure du corps de pied de pale.

L'anneau 100 comprend une partie supérieure 104 comportant sur sa périphérie interne une pluralité d'encoches 106 régulièrement réparties autour de l'axe de l'anneau 100. Des dents de crabot 108 en saillie radialement vers l'extérieur sont formées sur la surface cylindrique externe de l'anneau. Ces dents 108 sont au nombre de trois dans la réalisation représentée aux figures et ont chacune une étendue angulaire de 60° environ.

Le logement radial comprend également trois dents de crabot 112 régulièrement réparties autour de l'axe D du logement radial. Ces dents 112 sont formées sur une surface interne cylindrique du logement et ont chacune une étendue angulaire de 60° environ.

A l'arrêt de la turbomachine, l'anneau 100 est en appui axial sur un épaulement annulaire 110 du logement et un jeu axial existe entre les dents de crabots 108 de l'anneau 100 et les dents de crabots 112 du logement radial. Ce jeu axial est nécessaire au montage de l'anneau 100 dans le logement radial. En fonctionnement, la force centrifuge pousse les dents de crabot 108 de l'anneau 100 en appui axial sur les dents de crabot 112 du logement radial.

Des cales de blocage 114 telles que des secteurs de cylindre sont engagées axialement entre les dents de crabot 108 de l'anneau 100 et les dents de crabot 112 du logement et viennent en butée axiale sur l'épaulement 110 du logement. Dans la réalisation représentée aux figures, les cales 114 s'étendent angulairement sur environ 60° et leur dimension axiale est suffisante pour que les cales s'intercalent circonférentiellement entre les dents de crabot 108 de l'anneau 100 et les dents de crabot 112 du logement.

Un couvercle annulaire 116 est vissé sur l'extrémité radialement externe du logement et comprend des encoches 118 régulièrement réparties sur sa périphérie interne.

Une seconde rondelle 120 est intercalée entre l'anneau 100 et le couvercle 116 et comprend des premières pattes 122 rabattues vers l'extérieur dans les encoches 118 du couvercle 116 et des secondes pattes 124 rabattues vers l'intérieur dans les encoches 106 de l'anneau 100. De cette manière, le couvercle 116 est immobilisé en rotation sur l'anneau 100 lui-même immobilisé en rotation dans le logement par les cales de blocage 114.

Des gorges annulaires 126 sont prévues sur la périphérie externe du logement et sur la partie supérieure de l'anneau, et reçoivent des joncs annulaires d'étanchéité (non représentés) coopérant avec la surface interne du couvercle annulaire externe 116.

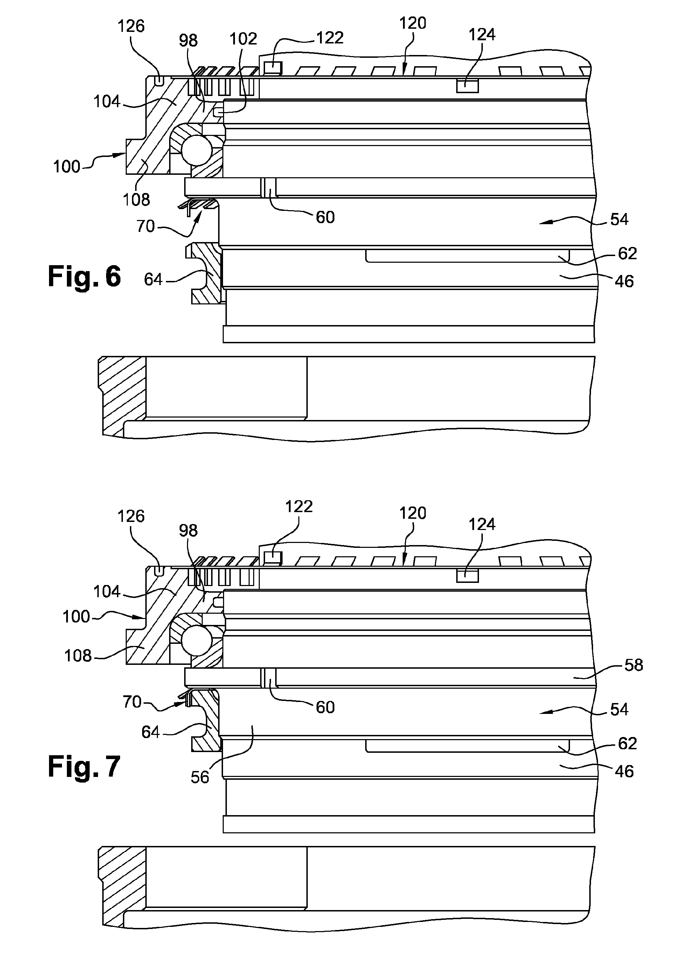

Le montage d'une pale dans un logement radial de l'anneau polygonal 100 est réalisé de la manière suivante (figures 6 à 11).

En premier lieu, le couvercle annulaire externe 116, la seconde rondelle 120 et l'anneau de blocage 100 sont engagés par translation autour du pied 38 depuis son extrémité inférieure et sont mis en attente pour une utilisation ultérieure. Le second palier 94 est monté d'une seule pièce autour du pied de pale. Les deux parties 66, 68 du segment annulaire sont agencées bout à bout dans la gorge annulaire du renfort métallique externe 46 de manière à ce que les dents 62 de la jupe cylindrique 56 pénètrent dans les renfoncements 52 de la gorge 50, afin d'immobiliser en rotation le segment annulaire 54 dans la gorge annulaire (figure 6). La première rondelle 70 est montée autour du pied et l'écrou 64 est vissé sur la jupe cylindrique 56 du segment annulaire. Les premières pattes et secondes pattes 72, 74 de la première rondelle 70 sont rabattues pour immobiliser en rotation l'écrou 64 sur le segment annulaire 54 (figure 7).

Par ailleurs, la rondelle de précontrainte 82 a été montée dans le logement radial et le premier palier 76 a été monté à l'état assemblé sur le rebord annulaire 78.

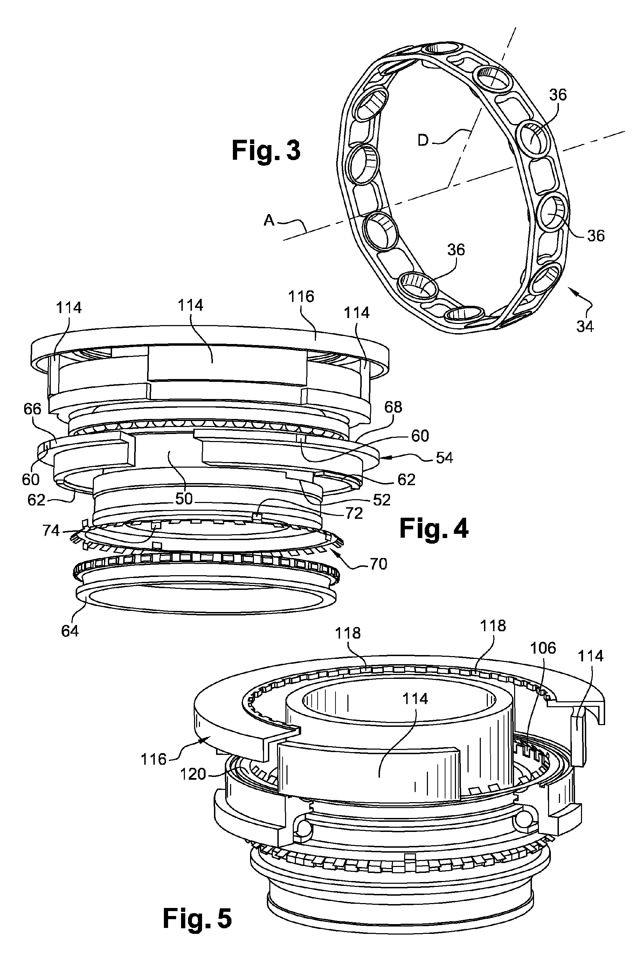

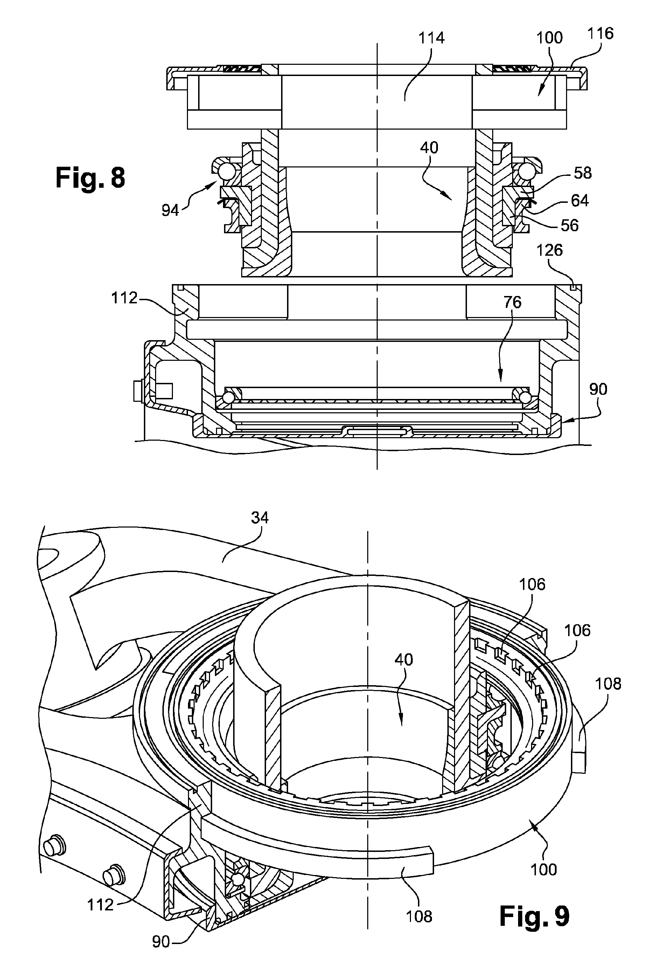

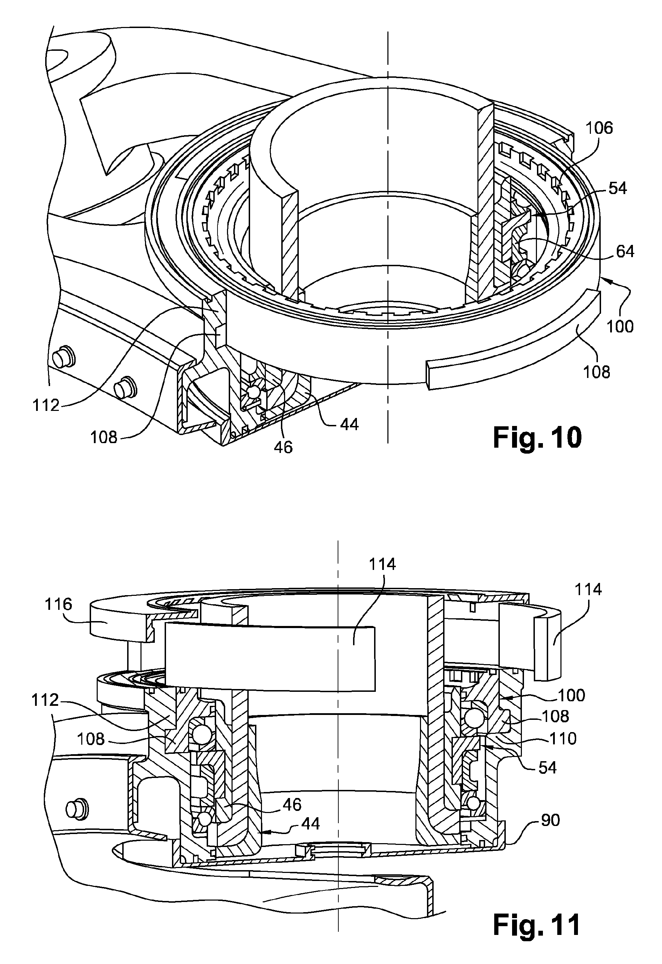

Le pied de pale est ensuite engagé axialement dans le logement radial (figure 8), l'écrou 64 formant une entretoise d'appui sur le premier palier 76. L'anneau de blocage 100 est positionné angulairement de manière à ce que ses dents de crabot 108 s'engagent axialement entre les dents de crabot 112 du logement (figure 9). L'anneau de blocage 100 est ensuite inséré axialement jusqu'à venir en butée axiale sur l'épaulement annulaire 110 du logement puis il est tourné d'un angle de 60° correspondant à l'étendue angulaire des dents de crabot de manière à assurer le blocage axial de l'anneau 100 dans le logement radial (figure 10). Les cales de blocage 114 au nombre de trois sont engagées axialement depuis l'extérieur entre les dents de crabot 108 de l'anneau 100 et les dents de crabot 112 du logement afin d'immobiliser en rotation l'anneau 100 dans le logement radial (figure 4 et 11), ces cales 114 venant également en butée axiale sur l'épaulement annulaire 110 du logement.

Enfin, le couvercle externe 116 est vissé sur l'extérieur du logement et les pattes 122, 124 de la seconde rondelle sont ensuite rabattues pour immobiliser en rotation le couvercle 116 sur l'anneau 100 (figure 2).

Selon l'invention, toutes les pièces nécessaires à la fixation du pied de pale dans son logement radial sont montées depuis l'extérieur du logement ce qui rend possible un démontage rapide des pales sur l'aile au cours d'une escale. De plus, les paliers de roulement 76, 94 sont montés à l'état assemblé et non plus bille par bille comme dans la technique antérieure, ce qui limite les risques d'introduction d'éléments abrasifs dans les paliers.

Les efforts centrifuges des pales en fonctionnement sont transmis par l'appui des dents de crabot 108 de l'anneau 100 sur les dents de crabot 112 du logement et non pas par des filets de vis, ce qui augmente la durée de vie de l'hélice ainsi assemblée.

Dans une variante de réalisation de l'invention, le pied de pale a une épaisseur sensiblement constante et comprend des ondulations coopérant avec des ondulations complémentaires des renforts métalliques, afin d'ajouter de l'adhérence entre le pied de pale et les renforts métalliques interne et externe. Le rayon de courbure des ondulations est avantageusement supérieur à 4 mm.

Les pales peuvent être réalisées par tissage d'un matériau composite à fibres de carbone.

Dans la réalisation décrite en référence aux figures, l'anneau 100 comprend une seule rangée annulaire de dents de crabot 108. Toutefois, l'invention couvre également les réalisations dans lesquelles l'anneau 100 de blocage comprend deux rangées annulaires de dents de crabot 108 espacées axialement l'une de l'autre et coopérant chacune avec une rangée annulaire de dents de crabot du logement. Dans une première configuration, les deux rangées de dents de crabot participent simultanément à la tenue radiale de la pale. Dans une deuxième configuration, les dents de l'une des deux rangées sont en appui sur les dents d'une rangée du logement, tandis que les dents de crabots de l'autre rangée sont faiblement espacées axialement au montage des dents de crabots de l'autre rangée du logement et sont destinées à assurer la retenue radiale et la transmission des efforts centrifuge de la pale en cas de rupture des dents de la première rangée de l'anneau de blocage. Ce type de configuration est décrit en détail dans la demande antérieure FR 09/04126 de la demanderesse.

Pour résister à des efforts centrifuges de l'ordre de 30 tonnes en fonctionnement, les dents de crabot 108 de l'anneau 100 de blocage représenté aux figures ont une épaisseur axiale de l'ordre 12 mm. Dans le cas où l'anneau 100 de blocage comprend deux rangées de dents de crabot en appui simultané, l'épaisseur axiale des dents de crabots est alors divisée par deux et est de l'ordre de 6 mm.

## Revendications

1. Hélice non carénée pour une turbomachine, comprenant des pales d'hélice montées à rotation autour de leurs axes dans des logements radiaux (36) d'un élément annulaire de rotor (34), chaque pale comportant un pied (38) à corps cylindrique (40) engagé depuis l'extérieur dans un logement radial (36) et guidé en rotation autour de son axe dans ce logement (36) par deux paliers de roulement (76, 94), **caractérisée en ce qu'**un premier palier (76) est porté par un rebord annulaire (78) de l'extrémité radialement interne du logement, **en ce que** le second palier (94) est porté par un segment annulaire (54) à jupe cylindrique (56) montée dans une gorge (50) du corps cylindrique (40) et par un écrou de verrouillage (64) vissé sur la jupe cylindrique (56) du segment et formant une entretoise d'appui sur le premier palier (76), le second palier (94) étant coiffé extérieurement par un anneau (100) entourant le corps cylindrique (40) du pied de pale et comportant des dents de crabot externes (108) coopérant avec des dents de crabot internes (112) du logement pour retenir axialement l'anneau (100) dans le logement, et **en ce que** des moyens de blocage (114) sont engagés entre les dents de crabot (112) du logement et entre les dents de crabot (108) de l'anneau (100) pour empêcher la rotation de l'anneau (100) et son retrait axial du logement.

2. Hélice selon la revendication 1, **caractérisée en ce qu'**un couvercle annulaire (116) entourant le pied de pale est vissé sur l'extrémité externe du logement pour interdire le retrait axial des moyens de blocage (116).

3. Hélice selon la revendication 1 ou 2, **caractérisée en ce que** le segment annulaire (54) est en deux parties (66, 68) montées bout à bout dans la gorge (50) du corps de pale.

4. Hélice selon la revendication 3, **caractérisée en ce que** la jupe cylindrique (56) du segment annulaire (54) comprend au moins une dent (62) en saillie axiale engagée dans un renfoncement (72) du corps cylindrique (40) et débouchant dans la gorge annulaire (50) de manière à bloquer en rotation le segment (54) sur le corps cylindrique (40).

5. Hélice selon l'une des revendications 1 à 4, **caractérisée en ce qu'**une rondelle de verrouillage (70) est intercalée entre l'écrou (64) et le segment annulaire (54) et coopère par liaison de formes avec l'écrou (64) et le segment (54) afin de bloquer en rotation l'écrou (64) sur le pied de pale.

6. Hélice selon l'une des revendications précédentes, **caractérisée en ce que** l'anneau (100) comprend trois dents de crabot (108) régulièrement réparties autour son axe et ayant chacune une étendue angulaire d'environ 60°.

7. Hélice selon l'une des revendications 1 à 6, **caractérisée en ce que** les moyens de blocage comprennent des cales (114) en forme de secteur de cylindre engagées par translation axiale depuis l'extérieur entre les dents de crabot (108) de l'anneau (100) et les dents de crabot (112) du logement.

8. Hélice selon la revendication 2, **caractérisée en ce qu'**une rondelle de verrouillage (120) est intercalée entre le couvercle (112) et l'anneau (100) et coopère par liaison de formes avec le couvercle (112) et l'anneau (100) afin de solidariser en rotation le couvercle (112) sur l'anneau (100).

9. Hélice selon l'une des revendications précédentes, **caractérisée en ce que** le pied de pale est creux et comprend des renforts métalliques (44, 46) fixés par collage sur ses faces interne et externe.

10. Hélice selon la revendication 9, **caractérisée en ce que** la paroi du pied de pale est d'épaisseur sensiblement constante et comprend des ondulations coopérant avec des ondulations complémentaires des renforts.

11. Turbomachine, telle qu'un turbopropulseur ou un turboréacteur d'avion, **caractérisée en ce qu'**elle comprend au moins une hélice selon l'une des revendications précédentes.

## Patentansprüche

1. Nicht ummantelter Propeller für eine Turbomaschine bzw. ein Turbotriebwerk, wobei die Propellerblätter um ihre Achsen drehbar in radialen Aufnahmeausnehmungen (36) eines ringförmigen Rotorteils (34) gelagert sind, wobei jedes Blatt eine Blattwurzel (38) mit zylindrischem Körper (40) aufweist, die von außen in eine radiale Aufnahmeausnehmung (36) eingreift und in dieser Aufnahmeausnehmung (36) über zwei Wälzlager (76, 94) um ihre Achse drehbar geführt wird, **dadurch gekennzeichnet, dass** ein erstes Lager (76) von einer ringförmigen Randleiste (78) des radial inneren Endes der Aufnahmeausnehmung getragen wird, dass das zweite Lager (94) von einem ringförmigen Segment (54) mit zylindrischer Schürze (56), die in einer Nut (50) des zylindrischen Körpers gelagert ist, und von einer Verriegelungsmutter (64) getragen wird, die an die zylindrische Schürze (56) des Segments angeschraubt ist und eine Stützstrebe zum Abstützen am ersten Lager (76) bildet, wobei das zweite Lager (94) außen von einem Ring (100) übergriffen wird, der den zylindrischen Körper (40) der Blattwurzel umgibt und äußere Klauenzähne (108) aufweist, die mit inneren Klauenzähnen (112) der Aufnahmeausnehmung zusammenwirkt, um den Ring (100) axial in der Aufnahmeausnehmung zu halten, und dass Sicherungsmittel (114) zwischen die Klauenzähne (112) der Aufnahmeausnehmung und die Klauenzähne (108) des Rings (100) eingreifen, um die Drehung des Rings (100) und dessen axiales Herausziehen aus der Aufnahmeausnehmung zu verhindern.

2. Propeller nach Anspruch 1, **dadurch gekennzeichnet, dass** eine die Blattwurzel umgebende ringförmige Abdeckung (116) an das äußere Ende der Aufnahmeausnehmung angeschraubt ist, um das axiale Herzausziehen der Sicherungsmittel (116) zu unterbinden.

3. Propeller nach Anspruch 1 oder 2, **dadurch gekennzeichnet, dass** das Ringsegment (54) aus zwei Teilen (66, 68) besteht, die auf Stoß in der Nut (50) des Blattkörpers angebracht sind.

4. Propeller nach Anspruch 3, **dadurch gekennzeichnet, dass** die zylindrische Schürze (56) des Ringsegments (54) zumindest einen axial vorspringenden Zahn (62) aufweist, der in eine Vertiefung (72) des zylindrischen Körpers (40) eingreift und so in die Ringnut (50) mündet, dass das Segment (54) am zylindrischen Körper (40) drehgesichert wird.

5. Propeller nach einem der Ansprüche 1 bis 4, **dadurch gekennzeichnet, dass** eine Verriegelungsscheibe (70) zwischen Mutter (64) und Ringsegment (54) eingesetzt ist und durch Formschluss mit der Mutter (64) und dem Segment (54) zusammenwirkt, um die Mutter (64) drehfest an der Blattwurzel zu sichern.

6. Propeller nach einem der vorangehenden Ansprüche, **dadurch gekennzeichnet, dass** der Ring (100) drei Klauenzähne (108) aufweist, die gleichmäßig um seine Achse herum verteilt sind und jeweils eine Winkelerstreckung von etwa 60° haben.

7. Propeller nach einem der Ansprüche 1 bis 6, **dadurch gekennzeichnet, dass** die Sicherungsmittel Keile (114) in Form von Zylindersektoren aufweisen, die von außen axial verschiebbar zwischen die Klauenzähne (108) des Rings (100) und die Klauenzähne (112) der Aufnahmeausnehmung eingreifen.

8. Propeller nach Anspruch 2, **dadurch gekennzeichnet**, das eine Verriegelungsscheibe (120) zwischen Abdeckung (112) und Ring (100) eingesetzt ist und durch Formschluss mit der Abdeckung (112) und dem Ring (100) zusammenwirkt, um die Abdeckung (112) drehfest am Ring zu sichern.

9. Propeller nach einem der vorangehenden Ansprüche, **dadurch gekennzeichnet, dass** die Blattwurzel hohl ausgeführt ist und metallische Verstärkungen (44, 46) aufweist, die durch Verkleben an ihrer Innen- und ihrer Außenseite befestigt sind.

10. Propeller nach Anspruch 9, **dadurch gekennzeichnet, dass** die Wand der Blattwurzel in der Dicke im Wesentlichen konstant ist und Wellenformen aufweist, die mit komplementär ausgeführten Wellenformen der Verstärkungen zusammenwirken.

11. Turbomaschine bzw. Turbinentriebwerk, wie etwa Turboproptriebwerk oder Turbostrahltriebwerk für Flugzeuge, **dadurch gekennzeichnet, dass** sie bzw. es zumindest einen Propeller nach einem der vorangehenden Ansprüche aufweist.

## Claims

1. An unducted fan for a turbine engine that has fan blades mounted to turn about their respective axes in radial housings (36) of an annular rotor element (34), each blade having a root (38) with a cylindrical body (40) engaged from the outside in a radial housing (36) and guided to turn about its axis in the housing (36) by two rolling bearings (76, 94), the fan being **characterized in that** a first bearing (76) is carried by an annular rim (78) of the radial inner end of the housing, **in that** the second bearing (94) is carried by an annular segment (54) of a cylindrical skirt (56) mounted in a groove (50) of the cylindrical body (40) and by a locknut (64) screwed onto the cylindrical skirt (56) of the segment and forming a spacer bearing against the first bearing (76), the second bearing (94) being covered on the outside by a ring (100) surrounding the cylindrical body (40) of the blade root and including outer dog-clutch teeth (108) co-operating with inner dog-clutch teeth (112) of the housing in order to retain the ring (100) axially in the housing, and **in that** blocking means (114) are engaged between the dog-clutch teeth (112) of the housing and between the dog-clutch teeth (108) of the ring (100) in order to prevent the ring (100) from turning and being extracted axially from the housing.

2. A fan according to claim 1, **characterized in that** an annular cover (116) surrounding the blade root is screwed onto the outer end of the housing in order to prevent the blocking means (116) being withdrawn axially.

3. A fan according to claim 1 or claim 2, **characterized in that** the annular segment (54) comprises two portions (66, 68) mounted end to end in the groove (50) of the blade body.

4. A fan according to claim 3, **characterized in that** the cylindrical skirt (56) of the annular segment (54) includes at least one axially-projecting tooth (62) engaged in a setback (72) of the cylindrical body (40) and leading into the annular groove (50) so as to prevent the segment (54) from turning on the cylindrical body (40).

5. A fan according to any one of claims 1 to 4, **characterized in that** a lockwasher (70) is interposed between the nut (64) and the annular segment (54) and co-operates by interfitting shapes with the nut (64) and with the segment (54) so as to prevent the nut (64) from turning on the blade root.

6. A fan according to any preceding claim, **characterized in that** the ring (100) has three dog-clutch teeth (108) regularly distributed about its axis, each having an angular extent of about 60°.

7. A fan according to any one of claims 1 to 6, **characterized in that** the blocking means comprise spacers (114) in the form of sectors of a cylinder engaged by moving in axial translation from the outside between the dog-clutch teeth (108) of the ring (100) and the dog-clutch teeth (112) of the housing.

8. A fan according to claim 2, **characterized in that** a lockwasher (120) is interposed between the cover (112) and the ring (100) and co-operates by interfitting shapes with the cover (112) and with the ring (100) in order to secure the cover (112) in rotation with the ring (100).

9. A fan according to any preceding claim, **characterized in that** the blade root is hollow and includes metal reinforcements (44, 46) fastened on its inner and outer faces by adhesive.

10. A fan according to claim 9, **characterized in that** the wall of the blade root is of substantially constant thickness and includes undulations co-operating with complementary undulations of the reinforcements.

11. A turbine engine, such as an airplane turbojet or turboprop, the turbine engine being **characterized in that** it includes at least one fan according to any preceding claim.
